(19) Europäisches Patentamt European Patent Office Office européen des brevets

(11) **EP 3 950 999 A1**

(12) **EUROPEAN PATENT APPLICATION**
published in accordance with Art. 153(4) EPC

(43) Date of publication:
09.02.2022 Bulletin 2022/06

(21) Application number: 20781760.2

(22) Date of filing: 27.03.2020

(51) International Patent Classification (IPC):
$C22C\ 38/00$ (2006.01)    $B23K\ 20/04$ (2006.01)
$C21D\ 8/02$ (2006.01)    $C22C\ 38/58$ (2006.01)

(52) Cooperative Patent Classification (CPC):
B23K 20/04; C21D 8/02; C22C 38/00; C22C 38/58

(86) International application number:
PCT/JP2020/014404

(87) International publication number:
WO 2020/203938 (08.10.2020 Gazette 2020/41)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 29.03.2019 JP 2019068968

(71) Applicant: NIPPON STEEL Stainless Steel
Corporation
Tokyo 100-0005 (JP)

(72) Inventors:
• TSUGE, Shinji
Tokyo 100-0005 (JP)
• OKADA, Nobuyuki
Tokyo 100-0005 (JP)
• KAWA, Masatomo
Tokyo 100-0005 (JP)
• OIKAWA, Yuusuke
Tokyo 100-0005 (JP)

(74) Representative: Vossius & Partner
Patentanwälte Rechtsanwälte mbB
Siebertstraße 3
81675 München (DE)

(54) **CLAD STEEL PLATE AND METHOD FOR MANUFACTURING SAME**

(57) The present invention has as its object the provision of clad steel plate eliminating solution treatment to make good use of the properties of the steel plate functioning as the base metal (toughness and strength) and simultaneously having good corrosion resistance and a method for manufacturing the same.

To solve that problem, duplex stainless steel comprised of C: 0.030% or less, Si: 0.05 to 1.0%, Mn: 0.10 to 3.00%, P: 0.05% or less, S: 0.005% or less, Cr: 22.00 to 27.00%, Ni: 4.00 to 7.00%, Mo: 0.50 to 2.50%, W: 0 to 1.50%, N: 0.10 to 0.25%, and oxygen: 0.001 to 0.006%, satisfying formula 1, formula 2, and formula 5, and having a balance of Fe and impurities is used as the cladding material and clad with steel plate. By this clad steel plate, even if eliminating the solution treatment, it is possible to obtain steel plate making good use of the properties of the steel plate forming the base metal while obtaining corrosion resistance.

$$\varepsilon_{max} = 0.0035 - T\sigma * 2.63 * 10^{-6} \ \text{(formula 1)}$$

$$T\sigma = 4Cr + 25Ni + 71(Mo+W) - 11.4(Mo-1.3)*(Mo-1.3) + 5Si - 6Mn - 30N + 569(°C) \ \text{(formula 2)}$$

$$PREW = Cr + 3.3(Mo + 0.5W) + 16N \ \text{(formula 5)}$$

EP 3 950 999 A1

**Description**

FIELD

The present invention relates to clad steel plate and a method for manufacturing the same. In particular, it relates to clad steel plate having duplex stainless steel having a chemical composition with a Mo content of 0.5 to 2.5% as the cladding material.

BACKGROUND

Duplex stainless steel contains Cr, Mo, Ni, and N in large amounts. Intermetallic compounds and nitrides easily precipitate, so the steel has been manufactured as a hot rolled steel material by performing solution treatment at 1000°C or more to cause the precipitates to dissolve. For this reason, at the time of manufacture of clad steel plate using duplex stainless steel as a cladding material, it has been proposed to use, as the base metal, carbon steel designed in chemical composition to enable the mechanical properties to be secured even if performing heat treatment at a high temperature of 1000°C or more (PTL 1). Further, art for manufacturing dual phase stainless clad steel plate eliminating heat treatment by control of the hot rolling conditions has also been proposed (PTL 2). Furthermore, art for reheating during hot rolling to keep down precipitation in the cladding material has also been proposed (PTL 3).

On the other hand, clad steel plate of lean duplex stainless steel reduced in Ni, Mo, etc. has also been proposed (PTL 4). Furthermore, to deal with the problem of the CaS in steel forming starting points of corrosion and impairing the corrosion resistance of the steel, clad steel plate using duplex stainless steel controlled in amounts of addition of Ca and A1 for rendering the CaS harmless to the corrosion resistance has also been proposed (PTL 5). In lean duplex stainless steel, the precipitates having the main effects are chromium nitrides.

[CITATIONS LIST]

[PATENT LITERATURE]

[PTL 1] Japanese Unexamined Patent Publication No. 7-292445
[PTL 2] Japanese Examined Patent Publication No. 4-22677
[PTL 3] Japanese Examined Patent Publication No. 6-36993
[PTL 4] Japanese Unexamined Patent Publication No. 2012-180567
[PTL 5] Japanese Unexamined Patent Publication No. 2018-028146

[NONPATENT LITERATURE]

[NPL 1] ISIJ Vol. 58 (2018), p1181-1183

SUMMARY

[TECHNICAL PROBLEM]

Clad steel plate is a steel material given corrosion resistance by the stainless steel used as the cladding material and given strength, toughness, and weldability by the base metal to thereby obtain composite properties. Clad steel plate is used at portions where the stainless steel used as cladding material and the base metal have to be structurally joined. It is generally thick and is used for applications where strength and toughness are particularly demanded. For example, seawater desalination equipment, tanks of tankers, etc. may be mentioned. For these applications, conventionally austenitic stainless steel had mainly been used, but recently proposals for using inexpensive duplex stainless steel have been increasing.

Therefore, clad steel plate made using a cladding material of duplex stainless steel has been strongly demanded. If clad steel plate is used, the functions of strength and toughness are given by the base metal while the corrosion resistance is given by the cladding material. In particular, in steel members of dams or sluice gates in brackish water regions, there are sliding members such as door stops and rails. Sometimes both slidability and corrosion resistance are demanded.

In this regard, the inventors discovered that the corrosion resistance of clad steel plate using duplex stainless steel having a chemical composition with an Mo content of 0.5 to 2.5% as a cladding material is mainly affected by precipitates of intermetallic compounds such as sigma (σ) phases.

"Sigma phases" are intermetallic compounds with high Cr content. If sigma phases precipitate during the hot rolling of duplex stainless steel, chromium-poor layers are formed in their surroundings and the corrosion resistance of the steel falls. Similarly, even if chromium nitrides precipitate, chromium-poor layers are formed at their surroundings and the corrosion resistance of the steel falls. The prior art (PTLs 4 and 5) do not touch upon the relationship of the forms and amounts of precipitation of the precipitates and the states of the other the metallic structures of the steel with the corrosion resistance of the steel.

Further, in the manufacture of conventional dual phase stainless hot rolled steel plate and clad steel plate, solution treatment has become essential. As explained above, this is so as to eliminate the intermetallic compounds and nitrides causing the corrosion resistance to fall in duplex stainless steel. In particular, duplex stainless steel used for the cladding material of clad steel plate has the property of easy precipitation of intermetallic compounds and nitrides in the hot working temperature region. For this reason, in the state after hot rolling is finished, these precipitates disperse in the steel material, so the corrosion resistance falls. Using solution treatment, the precipitates in the cladding material can be eliminated. However, if applying 1000°C or more solution treatment, the base metal ends up falling in toughness, so considered from the applications of clad steel plate, this is undesirable treatment.

Furthermore, in view of the demands for reducing costs and the demands for cutting energy usage in recent years as well, it is desirable to eliminate the solution treatment and cut the costs for manufacturing clad steel plate and the energy required for manufacture.

The present invention has as its object the provision of clad steel plate using duplex stainless steel having a chemical composition with an Mo content of 0.5 to 2.5% while eliminating solution treatment to make good use of the properties of the steel plate functioning as the base metal (toughness and strength) and simultaneously having excellent corrosion resistance and a method for manufacturing the same.

[SOLUTION TO PROBLEM]

The inventors thought that, to solve the above problem in the process of joining a base metal and a cladding material by hot rolling in the process for manufacture of clad steel plate, if no intermetallic compounds and nitrides precipitated in the cladding material formed by the duplex stainless steel, the corrosion resistance would not be impaired even if omitting the later process of solution treatment. Therefore, they thought of using duplex stainless steel, which is able to maintain a high corrosion resistance even if lowering the hot rolling temperature, for the cladding material of the clad steel plate. To obtain such duplex stainless steel, the inventors obtained findings regarding the chemical composition of hot rolled steel materials omitting solution treatment, the hot working conditions and amounts of precipitation of the sigma phases and chromium nitrides etc., the state of the metallic structure such as the restoration and recrystallization etc. of the ferrite phases and the austenite phases, and further the relationship of the impact properties and corrosion resistance of the steel material etc. In particular, sigma phases easily precipitate in the ferrite phases, so they found that the above problem can be solved by controlling the temperature of the hot rolling so that the microstrain $\varepsilon_\alpha$ in the ferrite phases satisfies a specific relationship with the Tσ.

Based on these findings, they completed the present invention of clad steel plate enabling elimination of solution treatment even if using stainless steel having a chemical composition with an Mo content of 0.5 to 2.5% as the cladding material.

That is, the gist of the present invention is as follows:

[1] Clad steel plate comprised of a base metal of steel plate on one surface or both surfaces of which a cladding material is clad, in which clad steel plate,

a chemical composition of the cladding material comprises, by mass%,
C: 0.030% or less,
Si: 0.05 to 1.00%,
Mn: 0.10 to 3.00%,
P: 0.050% or less,
S: 0.0050% or less,
Cr: 22.0 to 27.0%,
Ni: 4.00 to 7.00%,
Mo: 0.50 to 2.50%,
W: 0 to 1.50%,
N: 0.100 to 0.250%,
Oxygen: 0.001 to 0.006%,
Co: 0 to 1.00%,

Cu: 0 to 3.00%,
V: 0 to 1.00%,
Nb: 0 to 0.200%,
Ta: 0 to 0.200%,
Ti: 0 to 0.030%,
Zr: 0 to 0.050%,
Hf: 0 to 0.100%,
B: 0 to 0.0050%,
Al: 0 to 0.050%,
Ca: 0 to 0.0050%,
Mg: 0 to 0.0050%,
REM: 0 to 0.100%,
Sn: 0 to 0.100% and
a balance of Fe and impurities, **and**
has a PREW found by formula 5 is 24 or more and 35 or less,
a σ-phase precipitation temperature Tσ (°C) found by formula 2 is 800°C or more and 950°C or less,
a surface hardness of the cladding material is a value of 1.3 times or less of the solution treated state, and
a microstrain $\varepsilon_{\alpha}$ of that ferrite phase is $\varepsilon_{max}$ found by formula 1 or less:

$$\varepsilon_{max} = 0.0035 - T\sigma * 2.63 * 10^{-6} \text{ (formula 1)}$$

$$T\sigma = 4Cr + 25Ni + 71(Mo+W) - 11.4(Mo-1.3)*(Mo-1.3) + 5Si - 6Mn - 30N + 569(°C) \text{ (formula 2)}$$

$$PREW = Cr + 3.3(Mo+0.5W) + 16N \text{ (formula 5)}$$

where, the element symbols in formula 1, formula 2, and formula 5 show the contents (mass%) of the corresponding elements in the cladding material, 0 being inserted when not contained.

[2] The clad steel plate according to [1], further containing, in the chemical composition of the cladding material, by mass%, one or more of

Co: 0.03 to 1.00%,
Cu: 0.30 to 3.00%,
V: 0.03 to 1.00%,
Nb: 0.010 to 0.200%,
Ta: 0.010 to 0.200%,
Ti: 0.003 to 0.030%,
Zr: 0.005 to 0.050%,
Hf: 0.010 to 0.100%,
B: 0.0005 to 0.0050%,
Al: 0.003 to 0.050%,
Ca: 0.0005 to 0.0050%,
Mg: 0.0005 to 0.0050%,
REM: 0.010 to 0.100%, and
Sn: 0.010 to 0.100%.

[3] A method for manufacturing clad steel plate by a sandwich assembly technique comprising bonding cladding materials according to [1] or [2] on single surfaces of steel plate as a base metal forming a slab, superposing two such slabs so that the cladding materials are arranged at the inside, and hot rolling the single integrated slab, which method for manufacturing clad steel plate comprising hot rolling to have a finishing temperature TF satisfying formula 3 and then cooling from TF to 600°C by an average cooling rate of 0.6°C/s or more:

$$TF \geq T\sigma - 50 \text{ (°C) (formula 3)}$$

$$T\sigma = 4Cr + 25Ni + 71(Mo+W) - 11.4(Mo-1.3)*(Mo-1.3) + 5Si - 6Mn - 30N + 569 (°C) \text{ (formula 2)}$$

where, the element symbols in formula 2 show the contents (mass%) of the corresponding elements in the cladding material, 0 being inserted when not contained.

[4] A method for manufacturing clad steel plate by an open sandwich assembly technique comprising bonding a cladding material according to [1] or [2] on a single surface of a base metal of a steel sheet forming a slab and hot rolling the slab, which method for manufacturing clad steel plate comprising hot rolling to have a finishing temperature TF satisfying formula 4 and then cooling from TF to 600°C by an average cooling rate of 0.6°C/s or more:

$$TF \geq T\sigma + 30 \ (°C) \text{ (formula 4)}$$

$$T\sigma = 4Cr + 25Ni + 71(Mo+W) - 11.4(Mo-1.3)*(Mo-1.3) + 5Si - 6Mn - 30N + 569(°C) \text{ (formula 2)}$$

where, the element symbols in formula 2 show the contents (mass%) of the corresponding elements in the cladding material, 0 being inserted when not contained.

[ADVANTAGEOUS EFFECTS OF INVENTION]

According to the present invention, even if eliminating solution treatment, it is possible to obtain clad steel plate making good use of the properties of the steel plate forming the base metal (toughness and strength) while obtaining good corrosion resistance. As a result, the contribution to industry and the environment is extremely great.

BRIEF DESCRIPTION OF DRAWINGS

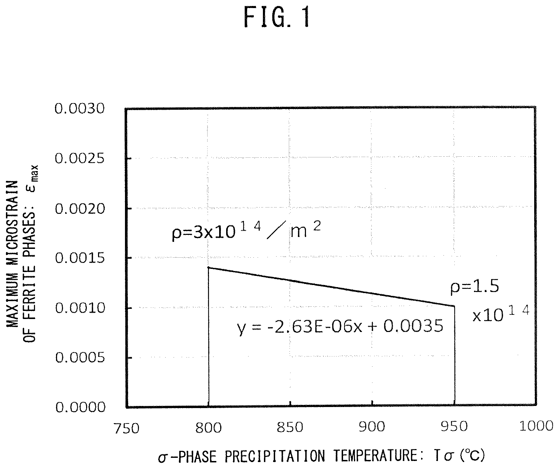

FIG. 1 is a view explaining the relationship between the microstrain of the ferrite phase of the surface layer part of the cladding material and the σ-phase precipitation temperature Tσ (°C).

DESCRIPTION OF EMBODIMENTS

Below, an embodiment of the present invention will be explained. Unless otherwise indicated, the "%" relating to constituents indicate the mass% in the steel.

As explained above, the inventors thought that, to solve the above problem in the process of joining the base metal and the cladding material by hot rolling in the process for manufacture of the clad steel plate, if no intermetallic compounds and nitrides precipitated in the cladding material formed by the duplex stainless steel, the corrosion resistance would not be impaired even if omitting the later process of solution treatment. Therefore, they thought of using duplex stainless steel, which is able to maintain a high corrosion resistance even if lowering the hot rolling temperature, for the cladding material of the clad steel plate. To obtain such duplex stainless steel, the inventors ran the following tests to investigate the chemical composition of hot rolled steel materials omitting solution treatment, the hot working conditions and amounts of precipitation of the sigma phases and chromium nitrides etc., the state of the metallic structure such as the restoration and recrystallization etc. of the ferrite phases and the austenite phases, and further the relationship of the corrosion resistance of the steel material etc.

As an indicator relating to precipitation of the sigma phases, the sigma-phase precipitation temperature Tσ is introduced. Duel phase stainless steel with different sigma-phase precipitation temperatures Tσ were used to obtain plate thickness 10 mm to 35 mm hot rolled steel materials while rendering the heating temperature of the hot rolling 1150 to 1250°C, the inlet side temperature TF of the final finishing pass of the hot rolling 700 to 1000°C, and the accelerated cooling start temperature TC after the end of hot rolling 950°C or less. The obtained hot rolled steel materials and those same steel materials after solution treatment were evaluated for strength and impact properties and for the metallic structure and corrosion resistance at the surface layer parts and center parts of plate thickness.

Next, based on the findings of the duplex stainless steel obtained in the above experiments, the inventors tried to obtain the steel constituents and manufacturing conditions giving high strength even under rolling conditions giving good corrosion resistance of the duplex stainless steel. That is, they believed that it was necessary to adjust the constituents of ordinary steel to raise the recrystallization temperature and control the cooling at the σ-phase precipitation temperature region or less and ran the following experiments accordingly. They prepared slabs comprised of steels having various constituents on the surface of which duplex stainless steel was clad as a cladding material and assembled sandwich type clad materials of pairs of slabs with the cladding materials at the insides using electron beam welding.

They hot rolled the clad materials to obtained clad steel plates with thicknesses of cladding materials of 3 mm and total thicknesses of 20 mm to 50 mm which they then evaluated for strength, impact properties, metallic structure, and corrosion resistance.

Through the above experiments, the inventors perfected the present invention of clad steel plate using duplex stainless steel as the cladding material to eliminate solution treatment.

First, the chemical composition of the cladding material will be explained.

C is limited to a content of 0.030% or less for securing the corrosion resistance of the stainless steel. If contained in more than 0.030%, Cr carbides form at the time of hot rolling and the corrosion resistance and toughness deteriorate.

Si is contained in 0.05% or more for deoxidation. Preferably, it is contained in 0.20% or more. However, if contained in more than 1.00%, the toughness deteriorates. For this reason, the upper limit is made 1.00%. Preferably, this is contained in 0.70% or less.

Mn has the effect of increasing the austenite phases and improving the toughness. To secure the toughness of the base metal and weld zone and to obtain the effect of lowering the nitride precipitation temperature TN, it is contained in 0.10% or more. Preferably, it is contained in 0.20% or more. However, if contained in more than 3.00%, the corrosion resistance deteriorates. For this reason, the upper limit is made 3.00%. Preferably it is contained in 2.50% or less, more preferably 2.00% or less.

P is an element unavoidably entering from the raw materials. It causes the hot workability and toughness to deteriorate, so the less the better. Therefore, it is limited to 0.050% or less. Preferably it is contained in 0.030% or less.

S is also an element unavoidably entering from the raw materials. It causes the hot workability, toughness, and corrosion resistance to deteriorate, so the less the better. Therefore, it is limited to 0.0050% or less. Preferably it is contained in 0.0030% or less.

Cr is contained in 22.0% or more to secure the basic corrosion resistance. Preferably, it is contained in 23.0% or more. On the other hand, if contained in more than 27.0%, the ferrite phase fraction increases and the toughness and the corrosion resistance of the weld zones are impaired. For this reason, the content of Cr was made 27.0% or less. Preferably, it is contained in 26.0% or less.

Ni is contained in 4.00% or more so as to stabilize the austenite structures and improve the corrosion resistance against various acids and further improve the toughness. Increasing the Ni content enables the nitride precipitation temperature to be lowered. Preferably, it is contained in 4.50% or more. On the other hand, Ni is an expensive alloy. From the viewpoint of the costs, the content is made 7.00% or less. Preferably, it is contained in 6.50% or less.

Mo is an element extremely effective for raising the corrosion resistance of stainless steel and is contained in 0.50% or more. Preferably, it is contained in 1.00% or more. To improve the corrosion resistance, a larger amount may be contained, but this is an element promoting precipitation of the sigma phases, so 2.50% or less should be contained. Preferably, it is contained in 2.30% or less, more preferably 2.00% or less.

N (nitrogen) is an element which dissolves in the austenite phases to raise the strength and corrosion resistance. For this reason, 0.100% or more is contained. Preferably, 0.150% or more is contained. The solid solution limit rises along with the Cr content, but if more than 0.250% is included, the nitride precipitation temperature TN rises and Cr nitrides precipitate during the hot rolling to impair the toughness and corrosion resistance, so the upper limit of the content was made 0.250%. Preferably, it is contained in 0.220% or less.

O (oxygen) is an unavoidable impurity and is an important element forming oxides as typical nonmetallic inclusions. Excessive inclusion impairs the toughness. Further, if coarse oxide clusters are formed, they become causes of surface defects. For this reason, the upper limit was made 0.006%. On the other hand, excessive deoxidation results in rising costs, so the lower limit was made 0.001%.

The balance is comprised of Fe and impurities. The "impurities" are constituents etc. entering in the manufacturing process of the steel and remaining without being completely removed.

Furthermore, instead of Fe, it is also possible to include one or more of the following elements (W, Co, Cu, V, Nb, Ta, Ti, Zr, Hf, B, Al, Ca, Mg, REM, and Sn). These elements need not necessarily be contained, so the ranges of content include 0%.

W, like Mo, is an element improving the corrosion resistance of stainless steel and may be included accordingly. On the other hand, it is an expensive element, so 1.50% or less may be contained. Preferably, it is made 1.00% or less. The preferable content in the case of inclusion is made 0.05% or more.

Co is an element effective for improving the toughness of steel and the corrosion resistance and is included selectively. If included in more than 1.00%, since it is an expensive element, an effect commensurate with the cost is not exhibited, so the upper limit was set as 1.00%. The preferable content if included is made a range with a lower limit of 0.03% and an upper limit of 0.50%.

Cu is an element additionally raising the corrosion resistance of stainless steel against acids and has an action of improving the toughness, so can be included accordingly. If included in more than 3.00%, the solid solution limit is exceeded at the time of hot rolling and εCu precipitates causing embrittlement, so the upper limit was made 3.00%. The preferable content in the case of inclusion of Cu is made a range with a lower limit of 0.30% and an upper limit of 2.00%

V, Nb, and Ta are elements forming carbides and nitrides in steel and can be included in trace amounts for additionally raising the corrosion resistance. On the other hand, inclusion of large amounts of V, Nb, and Ta in steel containing N forms carbonitrides which impair toughness, so the upper limit is restricted. Considering the magnitudes of the actions of V, Nb, and Ta and the alloy costs, the respective upper limits are made 1.00%, 0.200%, and 0.200%. The preferable ranges in the case of inclusion are respectively made ones with lower limits of 0.03%, 0.010%, and 0.010% and upper limits of 0.20%, 0.100%, and 0.100%.

Ti, Zr, and Hf are elements forming nitrides and carbides in steel and can be included in trace amounts for the purpose of refining the crystal structure. The ability of Ti, Zr, and Hf to form nitrides is extremely strong, so inclusion of large amounts of Ti, Zr, and Hf in steel containing N causes formation of coarse nitrides which impair toughness, so upper limits are set. Considering the magnitudes of the actions of Ti, Zr, and Hf and the alloy costs, the respective upper limits were made 0.030%, 0.050%, and 0.100%. The preferable ranges in the case of inclusion are respectively made ones with lower limits of 0.003%, 0.005%, and 0.010% and upper limits of 0.020%, 0.030%, and 0.050%.

B is an element forming nitrides and carbides in steel and an element with a small solubility in steel and which easily segregates at the grain boundaries. It acts to improve the hot workability. On the other hand, excessive inclusion leads to formation of coarse nitrides which impair toughness of the steel. Therefore, the upper limit of the content was made 0.0050%. The preferable content in the case of inclusion is made a range with a lower limit of 0.0005% and an upper limit of 0.0035%.

A1 can be included for deoxidizing the steel. Further, it is an element forming nitrides. Excessive inclusion leads to the formation of coarse nitrides which impair the toughness, so the upper limit was set to 0.050%. The preferable content if included is made a range with a lower limit of 0.003% and an upper limit of 0.030%.

Ca and Mg can be included for improving the hot workability of the steel. Excessive inclusion conversely leads to impairment of the hot workability, so the upper limits were made 0.0050%. The preferable contents if included are made ranges with lower limits of 0.0005% and upper limits of 0.0035%.

REMs can be included for improving the hot workability of the steel. Excessive inclusion conversely leads to impairment of the hot workability, so the upper limit was made 0.100%. The preferable content if included is a range with a lower limit of 0.010% and upper limit of 0.080%. Here, REMs are lanthanoid series rare earth elements such as La and Ce. The content is the total of the same.

Sn is an element additionally raising the corrosion resistance of steel against acids and can be included for that purpose. On the other hand, excessive inclusion leads to impairment of the hot workability of the steel, so the upper limit was made 0.100%. The preferable content if included is made a range with a lower limit of 0.010% and upper limit of 0.080%.

PREW is an indicator of the pitting resistance of stainless steel and is calculated by formula 5 using the contents (%) of the alloy elements Cr, Mo, W, and N. If the PREW of duplex stainless steel is less than 24, corrosion resistance in brackish water environments cannot be obtained, while if alloy elements are included in more than 35, the cost rises, so the range of PREW is set as 24 or more and 35 or less.

$$PREW=Cr+3.3(Mo+0.5W)+16N \text{ (formula 5)}$$

where, the element symbols in formula 5 show the contents (mass%) of the corresponding elements, 0 being inserted when not contained.

The $\sigma$-phase precipitation temperature $T\sigma$ (°C) is an indicator determined by the chemical composition of the cladding material. It expresses the temperature at which the sigma phases start to precipitate in a balanced manner and is a value found by thermodynamic calculation with respect to the equilibrium phase diagram of the metal material. The thermodynamic calculation can be performed using the commercially available software Themocalc@ and a thermodynamic database (FE-DATA version 6 etc.) This was calculated for various types of duplex stainless steel. Sigma phases are intermetallic compounds having Fe, Cr, Mo, and W as main elements. In duplex stainless steel with contents of Fe and Cr in certain numerical ranges, Mo and W promote precipitation. Cr is a main element causing the precipitation of sigma phases. $T\sigma$ changes depending on the magnitude of the amount of Cr as well. For this reason, the inventors prepared a formula for finding the value of $T\sigma$ able to be applied in the range of constituents of the steel of the present invention (formula 2). For the purpose of controlling the precipitation of the sigma phases during hot rolling so as to obtain the desired clad steel plate, the lower limit of this $T\sigma$ (formula 2) was made 800°C and the upper limit was made 950°C. If $T\sigma$ is less than 800°C, precipitation of the sigma phases is suppressed, but the result becomes steel with little Mo and Cr contents, so the desired corrosion resistance becomes difficult to obtain. On the other hand, if more than 950°C, suppression of precipitation of the sigma phases at the surface layer part of the clad steel plate becomes difficult, so the above numerical range was set.

$$T\sigma=4Cr+25Ni+71(Mo+W)-11.4(Mo-1.3)*(Mo-1.3)+5Si-6Mn-30N+569(°C) \text{ (formula 2)}$$

where, the element symbols in formula 2 show the contents (mass%) of the corresponding elements, 0 being inserted when not contained.

The surface hardness of the cladding material is a property governing the surface properties of the clad steel plate. The higher the better. The steel plate of the present invention is cooled after hot rolling and is a product usable without solution treatment. It is characterized by having a higher hardness than a solution treated material. For this reason, the surface hardness of the cladding material is prescribed as having a hardness of 1.3 times the solution treated state or less. The higher the hardness the better, but the large strain introduced during hot rolling and remaining thereafter promotes precipitation of the intermetallic compounds and impairs the corrosion resistance of the surface of the clad steel plate, so the upper limit was made 1.3 times.

Here, the "solution treated state" means the surface hardness at the time of solution treatment of the same cladding material. For measurement of the degree of hardness, a position of the surface layer part (region from surface down to 0.1 to 0.5 mm in thickness direction) of the cladding material comprised of the duplex stainless steel (sample A1) was polished down to and measured for Vickers hardness. The material of this sample which was additionally solution treated by soaking at 1050°C (sample B1) was similarly measured for hardness. The ratio of the surface hardness of the cladding material with respect to the solution treated state (hardness of sample A1 /hardness of sample B1) was used as the value. Preferably, the surface hardness of the cladding material (sample A1) is 1.05 to 1.30 times the surface hardness in the case of performing solution treatment (sample B1). The explanation was given of the example where the sample A1 and the sample B1 were the same material, but they do not necessarily have to be the same. If the same steel material, they may be separate samples as well (for example, separate samples cut from the steel material).

The microstrain $\varepsilon_\alpha$ of the ferrite phases is an important value in prescribing the cladding material of the steel plate. Duplex stainless steel is comprised of ferrite phases and austenite phases, but the behaviors in the change of structures during hot working greatly differ. The strain introduced by hot working becomes dislocations inside the material. The dislocations are recovered from and are decreased in the process of recrystallization. The speed of decrease of the dislocation density in the austenite phases is slow. On the other hand, the speed of decrease of the dislocation density in the ferrite phases is fast. Based on such a finding, the inventors prepared clad steel plates of duplex stainless steel under various hot rolling conditions and investigated the metallic structures at the surface layer parts of the cladding materials. As a result, the inventors found that if duplex stainless steel is not suitably hot rolled, the decrease in dislocation density of the ferrite phases is suppressed and strain remains in the cladding material of the clad steel plate. Further, they found that in the cooling process after the hot rolling, intermetallic compounds difficult to observe by an optical microscope precipitate and the corrosion resistance falls accordingly. Further, they found that in the process of such precipitation, the microstrain of the ferrite phases increases. Putting together these findings, it is possible to obtain the desired properties by controlling the microstrain of the ferrite phases at the surface layer part of the cladding material to become smaller than the $\varepsilon_{max}$ found at formula 1 (FIG. 1).

$$\varepsilon_{max}=0.0035-T\sigma\times2.63\times10^{-6} \text{ (formula 1)}$$

where, the element symbols in formula 1 show the contents (mass%) of the corresponding elements, 0 being inserted when not contained.

Here, the value of the microstrain is a value which can be found by X-ray diffraction. Its unit is dimensionless. A specific method of measurement will be explained. A position of the surface layer part (region from surface down to 0.1 or more and 0.5 mm or less in thickness direction) of the cladding material comprised of the duplex stainless steel (sample A2) was machined down to and electrolytically polished to finish it to dimensions of 3 mm thickness x 20 mm width x 20 mm length or so in order that that no strain remained when preparing the sample, then this was examined by X-ray diffraction using $CuK\alpha$ rays or other beam sources to measure the diffraction intensity profile A of the diffraction planes of the ferrite phases and austenite phases. As a comparative material, the cladding material was solution treated by soaking at 1050°C and cleared of strain introduced by hot working (sample B2) to prepare a similar sample for X-ray diffraction and measure a strain-free diffraction intensity profile B. In samples with large remaining strain, the diffraction intensity profile has a wide spread (half width) with respect to the diffraction angle $2\theta$. By comparing the profiles A and B, the amounts of increase of the half widths are found for each of the diffraction planes. These are numerically processed to quantify the microstrains of the ferrite phases and austenite phases. The thus found relationship of the microstrain and the dislocation density inside a sample is a fixed relationship. For the relationship between the two for the ferrite phases, NPL 1 may be referred to.

The method for manufacture will be explained next.

"Sandwich assembly" is the technique of bonding cladding materials having the above chemical composition on one surface of a base metal of a steel sheet forming a slab and superposing two such slabs so that their cladding materials are arranged at the inside to assemble a single integrated slab. The chemical composition of the steel sheet as the base metal is not particularly limited. A slab comprised of a base metal, cladding material, cladding material, and base metal in this way is heated in accordance with an ordinary method, taken out from the heating furnace, then hot rolled to manufacture a rolled clad steel plate. The finishing temperature TF is defined as the surface temperature of the steel plate at the inlet of the final pass in hot rolling. In the experiment explained above, the slab may be hot rolled with a relationship of the sigma-phase precipitation temperature $T\sigma$ of the duplex stainless steel functioning as the cladding material and TF comprised of the relationship shown in formula 3 and the plate manufactured so that the average cooling rate from TF to 600°C of the hot rolled clad steel plate becomes 0.6°C/s ("s" indicates seconds) or more.

$$TF \geq T\sigma - 50 \ (°C) \ (\text{formula 3})$$

$T\sigma$ is the $\sigma$-phase precipitation temperature obtained by the above formula 2.

Note that, in the case of the sandwich assembly technique, the cladding materials are arranged at the inside and the base metals are arranged at the outsides, so it is considered that the temperature of the cladding material becomes higher than the surface temperature of the steel plate.

The reason for prescribing the average cooling rate from TF to 600°C is that in the metallic structure after hot rolling, the temperature region where the sigma phases and other intermetallic compounds precipitate is 900 (preferably $T\sigma$) to 700°C or so, so the cooling rate in this temperature zone must be made larger. Preferably, the cooling start temperature may be made $T\sigma$ °C or more.

To make the cooling rate of the clad steel plate of the large thickness hot rolled by the sandwich assembly technique 0.6°C/s or more, it is sufficient to perform water cooling after the end of hot rolling. If the plate thickness is small, air cooling or forced circulation cooling may be used.

The faster the cooling rate the better. Preferably it is made 1.0°C/s or more, more preferably it is made 5.0°C/s or more.

"Open sandwich assembly" is the technique of bonding a base metal of a steel plate and a cladding material of duplex stainless steel to form a slab. The slab comprised of the base metal and the cladding material in this way is heated by an ordinary method, taken out from the heating furnace, then hot rolled to manufacture rolled clad steel plate. The finishing temperature TF is defined as the surface temperature of the steel plate at the inlet of the final pass in hot rolling. In the experiment explained above, the slab may be hot rolled with a relationship of the sigma-phase precipitation temperature $T\sigma$ of the duplex stainless steel functioning as the cladding material and TF comprised of the relationship shown in formula 4 and the plate manufactured so that the average cooling rate from TF to 600°C of the hot rolled clad steel plate becomes 0.6°C/s or more.

$$TF \geq T\sigma + 30 \ (°C) \ (\text{formula 4})$$

$T\sigma$ is the $\sigma$-phase precipitation temperature obtained by the above formula 2.

Note that, in the case of the open sandwich assembly technique, the cladding material is arranged at the outside and the base metal is arranged at the inside, so it is considered that the cladding material temperature becomes the steel plate surface temperature.

Here, the reason for defining the average cooling rate from TF to 600°C is that, in the same way as the case of the sandwich assembly technique, in the metallic structure after hot rolling, the temperature region in which the sigma phases and other intermetallic compounds precipitate is 900 (preferably $T\sigma$) to around 700°C, so the cooling rate has to be raised in this temperature zone. Preferably, the cooling start temperature is made $T\sigma$ or more.

The faster the cooling rate the better. Preferably, it is 1.0°C/s or more. With clad steel plate hot rolled by the open sandwich assembly technique, if cooled by a fast cooling rate such as with water cooling, the difference in thermal expansion between the cladding material and the base metal steel sometimes will cause warping of the clad steel plate and make rolling difficult. For this reason, it is preferable to adopt air cooling or forced circulation cooling or another cooling method. Preferably, the cooling rate is limited to 10.0°C/s or less.

By performing suitable hot rolling matched with the sigma-phase precipitation temperature of the duplex stainless steel used as the cladding material, it is possible to suppress structural changes accompanying the precipitation of sigma phases at the surface of the cladding material and manufacture clad steel plate having excellent corrosion resistance. If duplex stainless steel is hot rolled by a temperature overly cooled to compared with the sigma-phase precipitation temperature, structural changes of the duplex stainless steel will progress and the corrosion resistance will fall along with the degree of overcooling. Here, in a sandwich assembly type clad steel plate, the cladding materials are positioned inside of the steel material, so the plate is hot rolled in a state of a temperature of the cladding materials higher than the surface temperature of the steel materials. For this reason, in the sandwich assembly technique, the temperature of the cladding material is higher than the surface temperature of the steel material during hot rolling. By such an assembly technique, the temperature at which the cladding material is substantively rolled differs. That is, it became clear that it is necessary to prescribe the rolling temperature of formula 3 or formula 4 by the respective assembly rolling techniques.

Clad steel plate is obtained by making the temperature of the hot rolling a specific temperature or more according to the sigma-phase precipitation temperature of the duplex stainless steel functioning as the cladding material and making the cooling rate 0.6°C/s or more. Therefore, the base metal of the clad steel plate may be one or more types selected for use from the group comprised of ordinary steel (carbon steel) and alloy steel (however, except stainless steel) and is not particularly limited. It can be suitably selected for use in accordance with the objective and application. As alloy steel, low alloy steel, nickel steel, manganese steel, chromium molybdenum steel, high speed steel, etc. may be mentioned, but the invention is not limited to these and may be ordinary steel containing one or more elements.

EXAMPLES

Below, examples will be explained. Table 1 shows chemical compositions of cladding materials. Note that the balances besides the constituents described in Table 1 are Fe and unavoidable impurity elements. Further, the constituents shown in Table 1 with no contents described show impurity levels. "REMs" means lanthanoid series rare earth elements. The contents are the totals of these elements. Further, the sigma-phase precipitation temperatures in the table are found by formula 2.

The clad steel plates used duplex stainless steels of the chemical compositions shown in Table 1 as the cladding materials. As the base metals, SS400 steel having a composition of C: 0.16%, Si: 0.21%, Mn: 0.63%, P: 0.018%, S: 0.006%, Ni: 0.01%, Cr: 0.04%, Cu: 0.02%, and a balance of Fe and impurities and a predetermined thickness was used. Each cladding material was welded to one surface of steel forming the base metal to obtain a thickness 130 mm slab. In the open sandwich assembly technique, this slab was used as the material for hot rolling. In the sandwich assembly technique, two 130 mm thick slabs were welded together (sandwiched) with the cladding materials at the inside to obtain a 260 mm thick slab.

In the hot rolling in the sandwich assembly technique, the 260 mm thick slab was heated to a predetermined temperature of 1150 to 1220°C, then rolled by a two-stage rolling mill to prepare a clad steel plate. As the hot rolling conditions, 8 to 12 rolling operations were repeated. Finish rolling was performed by a TF of 830 to 1030°C so that the final thickness became 20 to 50 mm. Some of the clad steel plates were fast cooled by a spray cooling apparatus then transported to a cooling bed to be cooled. After the cooling, the center part of plate thickness was peeled apart to separate the plate into two clad steel plates. In this way, clad steel plate having a thickness of the cladding material of 3 mm and a total thickness of 10 to 25 mm was obtained. Some of the steel plates were used for solution treatment at 1050°C to obtain samples for X-ray diffraction use and samples for pitting potential measurement use for evaluating the metallic structure of the surface layer part of the cladding material before and after heat treatment.

In the hot rolling in the open sandwich assembly technique, a slab with the cladding material side face down was heated to a predetermined temperature of 1150 to 1220°C, then rolled by a two-stage rolling mill to prepare a clad steel plate. As the hot rolling conditions, 8 to 15 rolling operations were repeated. Finish rolling was performed by a TF of 780 to 1030°C so that the final thickness became 10 to 25 mm. After that, the clad steel plate was transported to a cooling bed to be cooled. In this way, clad steel plate having a thickness of the cladding material of 3 mm and a total thickness of 10 to 25 mm was obtained.

Some of the steel plates were used for solution treatment at 1050°C to obtain samples for X-ray diffraction use and samples for pitting potential measurement use for evaluating the metallic structure of the surface layer part of the cladding material before and after heat treatment.

The microstrain at the surface of the cladding material was measured using a 2.5 mm t x 20 w x 25 L sample for X-ray diffraction use finished by wet polishing by emery paper and electrolytic polishing at the surface 0.3 mm below the surface of the steel material so that no strain due to working the test piece remained. X-ray diffraction measurement using a CuK$\alpha$ ray source was used to measure the diffraction profiles of the ferrite phases and the austenite phases. The half width data of the steel materials before and after solution treatment (sample A and sample B) were used to find the microstrains of both phases of the sample A3 before solution treatment. Among these, the values of the microstrain of the ferrite phases are shown in Table 2 (sandwich assembly technique) and Table 3 (open sandwich assembly technique).

The surface hardness of the cladding material was measured at a plane 0.3 mm below the surface of the steel material under conditions of a Vickers load of 5 kgf. Steel materials before and after solution treatment (that is, sample A without solution treatment and sample B with solution treatment) were measured respectively n=3 times. The average values were found. The values of the ratios of the average values (=hardness of sample A/hardness of sample B) are shown in Table 2 and Table 3.

For measurement of the pitting corrosion of the cladding material, a plane 0.3 mm below the surface of the steel material was polarized in a 50°C-1 mol NaCl solution based on the method prescribed in JIS G0577 and the potential corresponding to a current density of 100 $\mu$A/cm$^2$ ($V_C'{}_{100}$) was measured. Steel materials before and after solution treatment (that is, a sample A3 without solution treatment and a sample B3 with solution treatment) were measured n=3 times. The average values were found and used as the pitting potentials of the samples. The differences of the average values are shown in Table 2 and Table 3. The pitting potentials of the samples A and samples B and their differences are also shown in Table 2 and Table 3. Samples where the pitting potential of the sample A was 0.3V or more and the difference in potential of the clad steel plate with respect to the potential of the solution treated material (difference of pitting potential of sample A and sample B) was 0.1V or less were deemed as passing.

Table 2 summarizes examples of cladding materials of clad steel plates obtained by using the steels shown in Table 1 as cladding materials and hot rolling them assembled by the sandwich assembly technique.

The clad steel plates of these examples of the present invention were confirmed to be high in surface hardness of the cladding material and to have corrosion resistances of a difference compared with solution treated materials of 0.1V or less or of no significant difference.

Table 3 summarizes examples of cladding materials of clad steel plates obtained by using the steels shown in Table 1 as cladding materials and hot rolling them assembled by the open sandwich assembly technique.

The clad steel plates of these examples of the present invention were confirmed to be high in surface hardness of the cladding material and to have corrosion resistances of a difference compared with solution treated materials of 0. 1V or less or of no significant difference.

[Table 1]

Table 1

| No. | C | Si | Mn | P | S | Cr | Ni | Mo | W | N | O | Co | Cu | V | Nb | Ta | Ti | Zr | Hf | B | Al | Ca | Mg | REM | Sn | PRE W | Tσ | Re-marks |
|---|---|---|---|---|---|---|---|---|---|---|---|---|---|---|---|---|---|---|---|---|---|---|---|---|---|---|---|---|
| | | | | | | | | | | | | | | | Constituent (mass%) | | | | | | | | | | | | | |
| 1 | 0.014 | 0.41 | 1.26 | 0.023 | 0.0012 | 23.5 | 5.15 | 1.30 | | 0.166 | 0.003 | | | | | | | | | | | | | | | 30.4 | 874 | |
| 2 | 0.013 | 0.38 | 0.79 | 0.021 | 0.0011 | 24.2 | 5.58 | 2.15 | | 0.179 | 0.004 | | 0.60 | | | | | | | | | | | | | 34.2 | 942 | |
| 3 | 0.008 | 0.28 | 0.48 | 0.022 | 0.0005 | 25.2 | 6.28 | 1.25 | 0.15 | 0.201 | 0.005 | | | | | | | | | | | | | | | 32.8 | 919 | |
| 4 | 0.012 | 0.38 | 1.25 | 0.018 | 0.0006 | 23.2 | 4.83 | 1.08 | | 0.158 | 0.003 | 0.08 | 0.35 | 0.09 | 0.004 | | 0.005 | | | 0.0018 | 0.023 | 0.0023 | 0.0005 | | 0.005 | 29.3 | 848 | |
| 5 | 0.025 | 0.45 | 1.38 | 0.025 | 0.0007 | 22.8 | 4.52 | 0.83 | 0.08 | 0.148 | 0.002 | | | | 0.034 | | 0.012 | | 0.021 | | 0.018 | 0.0025 | | | | 28.0 | 825 | |
| 6 | 0.009 | 0.56 | 1.83 | 0.028 | 0.0008 | 23.4 | 5.15 | 1.28 | | 0.172 | 0.003 | | 0.32 | 0.12 | | 0.015 | | 0.013 | | 0.0025 | 0.024 | | | 0.052 | 0.032 | 30.4 | 869 | |
| 7 | 0.012 | 0.31 | 0.45 | 0.031 | 0.0004 | 26.2 | 6.13 | 1.58 | | 0.224 | 0.003 | 0.12 | 0.60 | | 0.018 | | | | | | 0.016 | | | | | 35.0 | 930 | |
| 8 | 0.018 | 0.42 | 1.42 | 0.024 | 0.0004 | 23.4 | 4.97 | 1.08 | 0.03 | 0.174 | 0.002 | | | 0.11 | | | | | | 0.0021 | 0.022 | 0.0024 | 0.0012 | | 0.012 | 29.8 | 853 | |
| 13 | 0.009 | 0.51 | 1.83 | 0.027 | 0.0006 | 22.5 | 5.82 | 3.04 | | 0.167 | 0.000 | | 0.23 | | | | | | | | 0.022 | 0.0023 | 0.0005 | | | 35.2 | 972 | Comp. steel |

[Table 2]

Table 2

| No. | | Steel no. | Tσ (°C) | Thickness after rolling (mm) | TF (°C) | Formula 3 (°C) | Cooling rate (°C/s) | Hardness A | Hardness B | Hardness ratio A/B | Pitting potential A | Pitting potential B | Pitting potential difference B-A | εα | εmax | Judgment |
|---|---|---|---|---|---|---|---|---|---|---|---|---|---|---|---|---|
| 1 | | 1 | 874 | 30 | 1000 | 824 | 1.0 | 235 | 220 | 1.07 | 0.57 | 0.60 | 0.03 | 0.0004 | 0.0012 | Good |
| 2 | | 1 | 874 | 30 | 950 | 824 | 0.9 | 240 | 220 | 1.09 | 0.55 | 0.60 | 0.05 | 0.0006 | 0.0012 | Good |
| 3 | | 1 | 874 | 20 | 900 | 824 | 15 | 245 | 220 | 1.11 | 0.54 | 0.60 | 0.06 | 0.0007 | 0.0012 | Good |
| 4 | | 1 | 874 | 20 | 850 | 824 | 1.4 | 250 | 220 | 1.14 | 0.52 | 0.60 | 0.08 | 0.0009 | 0.0012 | Good |
| 5 | | 1 | 874 | 50 | 1000 | 824 | 5.5 | 235 | 220 | 1.07 | 0.59 | 0.60 | 0.01 | 0.0004 | 0.0012 | Good |
| 6 | | 1 | 874 | 50 | 950 | 824 | 6.5 | 240 | 220 | 1.09 | 0.58 | 0.60 | 0.02 | 0.0005 | 0.0012 | Good |
| 7 | | 2 | 942 | 20 | 950 | 892 | 15 | 250 | 230 | 1.09 | 0.90 | 0.95 | 0.05 | 0.0007 | 0.0010 | Good |
| 8 | | 2 | 942 | 30 | 950 | 892 | 10 | 245 | 230 | 1.07 | 0.92 | 0.95 | 0.03 | 0.0006 | 0.0010 | Good |
| 9 | Ex. | 2 | 942 | 50 | 950 | 892 | 5.0 | 245 | 230 | 1.07 | 0.93 | 0.95 | 0.02 | 0.0005 | 0.0010 | Good |
| 10 | | 3 | 919 | 20 | 950 | 869 | 15 | 245 | 230 | 1.07 | 0.61 | 0.64 | 0.03 | 0.0006 | 0.0011 | Good |
| 11 | | 3 | 919 | 30 | 900 | 869 | 10 | 250 | 230 | 1.09 | 0.60 | 0.64 | 0.04 | 0.0005 | 0.0011 | Good |
| 12 | | 4 | 848 | 30 | 900 | 798 | 10 | 240 | 220 | 1.09 | 0.50 | 0.54 | 0.04 | 0.0006 | 0.0013 | Good |
| 13 | | 5 | 825 | 30 | 900 | 775 | 10 | 230 | 215 | 1.07 | 0.39 | 0.44 | 0.05 | 0.0007 | 0.0013 | Good |
| 14 | | 6 | 869 | 30 | 900 | 819 | 10 | 245 | 220 | 1.11 | 0.58 | 0.61 | 0.03 | 0.0008 | 0.0012 | Good |
| 15 | | 7 | 930 | 30 | 950 | 880 | 10 | 250 | 235 | 1.06 | 0.98 | 1.03 | 0.05 | 0.0007 | 0.0011 | Good |
| 16 | | 8 | 853 | 30 | 900 | 803 | 10 | 235 | 220 | 1.07 | 0.53 | 0.58 | 0.05 | 0.0006 | 0.0013 | Good |
| 17 | | 1 | 874 | 30 | 1050 | 824 | 10 | 225 | 220 | 1.02 | 0.57 | 0.60 | 0.03 | 0.0006 | 0.0012 | Good |
| 18 | | 4 | 848 | 30 | 1050 | 798 | 1.0 | 225 | 220 | 1.02 | 0.52 | 0.54 | 0.02 | 0.0007 | 0.0013 | Good |
| 19 | | 2 | 942 | 30 | 800 | 892 | 0.9 | 305 | 230 | 1.33 | 0.67 | 0.95 | 0.28 | 0.0014 | 0.0010 | Poor |
| 20 | | 3 | 919 | 30 | 900 | 869 | 0.4 | 255 | 230 | 1.11 | 0.50 | 0.64 | 0.14 | 0.0012 | 0.0011 | Poor |
| 21 | Comp. ex. | 5 | 825 | 30 | 750 | 775 | 1.0 | 285 | 215 | 1.33 | 0.31 | 0.44 | 0.13 | 0.0016 | 0.0013 | Poor |
| 22 | | 6 | 869 | 30 | 750 | 819 | 1.0 | 290 | 220 | 1.32 | 0.45 | 0.61 | 0.16 | 0.0015 | 0.0012 | Poor |
| 23 | | 7 | 930 | 50 | 900 | 880 | 0.3 | 270 | 235 | 1.15 | 0.81 | 1.03 | 0.22 | 0.0014 | 0.0011 | Poor |
| 24 | | 8 | 853 | 30 | 950 | 803 | 0.4 | 260 | 220 | 1.18 | 0.42 | 0.58 | 0.16 | 0.0016 | 0.0013 | Poor |
| 25 | | 13 | 972 | 50 | 900 | 922 | 0.8 | 280 | 240 | 1.17 | 0.68 | 0.90 | 0.22 | 0.0014 | 0.0009 | Poor |

[Table 3]

Table 3

| No. | | Steel no. | Tσ (°C) | Thickness after rolling (mm) | TF (°C) | Formula 3 (°C) | Cooling rate (°C/s) | Hardness A | Hardness B | Hardness ratio A/B | Pitting potential A | Pitting potential B | Pitting potential difference B-A | εα | εmax | Judgment |
|---|---|---|---|---|---|---|---|---|---|---|---|---|---|---|---|---|
| 1 | | 1 | 874 | 15 | 1000 | 904 | 1.6 | 245 | 220 | 1.11 | 0.53 | 0.60 | 0.07 | 0.0006 | 0.0012 | Good |
| 2 | | 1 | 874 | 15 | 950 | 904 | 1.5 | 250 | 220 | 1.14 | 0.52 | 0.60 | 0.08 | 0.0008 | 0.0012 | Good |
| 3 | | 1 | 874 | 25 | 950 | 904 | 1.1 | 250 | 220 | 1.14 | 0.51 | 0.60 | 0.09 | 0.0009 | 0.0012 | Good |
| 4 | | 2 | 942 | 15 | 1000 | 972 | 1.6 | 255 | 230 | 1.11 | 0.86 | 0.95 | 0.09 | 0.0008 | 0.0010 | Good |
| 5 | | 3 | 919 | 15 | 1000 | 949 | 1.6 | 255 | 230 | 1.11 | 0.57 | 0.64 | 0.07 | 0.0008 | 0.0011 | Good |
| 6 | Ex. | 4 | 848 | 15 | 950 | 878 | 1.6 | 250 | 220 | 1.14 | 0.48 | 0.54 | 0.06 | 0.0007 | 0.0013 | Good |
| 7 | | 4 | 848 | 15 | 900 | 878 | 1.6 | 260 | 220 | 1.18 | 0.46 | 0.54 | 0.08 | 0.0008 | 0.0013 | Good |
| 8 | | 5 | 825 | 15 | 900 | 855 | 1.6 | 240 | 215 | 1.12 | 0.37 | 0.44 | 0.07 | 0.0007 | 0.0013 | Good |
| 9 | | 6 | 869 | 15 | 900 | 899 | 1.6 | 255 | 220 | 1.16 | 0.54 | 0.61 | 0.07 | 0.0008 | 0.0012 | Good |
| 10 | | 7 | 930 | 15 | 1000 | 960 | 1.6 | 265 | 235 | 1.13 | 0.95 | 1.03 | 0.08 | 0.0008 | 0.0011 | Good |
| 11 | | 8 | 853 | 15 | 900 | 883 | 1.6 | 250 | 220 | 1.14 | 0.51 | 0.58 | 0.07 | 0.0009 | 0.0013 | Good |
| 12 | | 1 | 874 | 15 | 850 | 904 | 1.5 | 305 | 220 | 1.39 | 0.48 | 0.60 | 0.12 | 0.0015 | 0.0012 | Poor |
| 13 | | 2 | 942 | 15 | 950 | 972 | 1.8 | 295 | 230 | 1.28 | 0.78 | 0.95 | 0.17 | 0.0017 | 0.0010 | Poor |
| 14 | | 3 | 919 | 15 | 900 | 949 | 1.4 | 290 | 230 | 1.26 | 0.51 | 0.64 | 0.13 | 0.0016 | 0.0011 | Poor |
| 15 | | 4 | 848 | 15 | 850 | 878 | 1.5 | 300 | 220 | 1.36 | 0.43 | 0.54 | 0.11 | 0.0015 | 0.0013 | Poor |
| 16 | Comp. ex. | 5 | 825 | 15 | 800 | 855 | 1.6 | 305 | 215 | 1.42 | 0.30 | 0.44 | 0.14 | 0.0016 | 0.0013 | Poor |
| 17 | | 6 | 869 | 15 | 850 | 899 | 1.6 | 290 | 220 | 1.32 | 0.46 | 0.61 | 0.15 | 0.0017 | 0.0012 | Poor |
| 18 | | 7 | 930 | 25 | 900 | 960 | 0.5 | 295 | 235 | 1.26 | 0.72 | 1.03 | 0.31 | 0.0021 | 0.0011 | Poor |
| 19 | | 8 | 853 | 15 | 850 | 883 | 1.5 | 280 | 220 | 1.27 | 0.45 | 0.58 | 0.13 | 0.0015 | 0.0013 | Poor |
| 20 | | 13 | 972 | 25 | 900 | 922 | 1.1 | 315 | 240 | 1.31 | 0.65 | 0.90 | 0.25 | 0.0017 | 0.0009 | Poor |

## INDUSTRIAL APPLICABILITY

According to the present invention, it becomes possible to provide economical clad steel plate of an alloy element-conserving type which is excellent in corrosion resistance. The present invention can be utilized for seawater desalination equipment, tanks of tankers, various containers, and all sorts of other industrial equipment and for structural use.

**Claims**

1.  Clad steel plate comprised of a base metal of a steel sheet on one surface or both surfaces of which a cladding material is clad, in which clad steel plate,

    a chemical composition of the cladding material comprises, by mass%,
    C: 0.030% or less,
    Si: 0.05 to 1.00%,
    Mn: 0.10 to 3.00%,
    P: 0.050% or less,
    S: 0.0050% or less,
    Cr: 22.0 to 27.0%,
    Ni: 4.00 to 7.00%,
    Mo: 0.50 to 2.50%,
    W: 0 to 1.50%,
    N: 0.100 to 0.250%,
    Oxygen: 0.001 to 0.006%,
    Co: 0 to 1.00%,
    Cu: 0 to 3.00%,
    V: 0 to 1.00%,
    Nb: 0 to 0.200%,
    Ta: 0 to 0.200%,
    Ti: 0 to 0.030%,
    Zr: 0 to 0.050%,
    Hf: 0 to 0.100%,
    B: 0 to 0.0050%,
    Al: 0 to 0.050%,
    Ca: 0 to 0.0050%,
    Mg: 0 to 0.0050%,
    REM: 0 to 0.100%,
    Sn: 0 to 0.100% and
    a balance of Fe and impurities, and
    has a PREW found by formula 5 is 24 or more and 35 or less,
    a $\sigma$-phase precipitation temperature $T\sigma$ (°C) found by formula 2 is 800°C or more and 950°C or less,
    a surface hardness of the cladding material is a value of 1.3 times or less of the solution treated state, and
    a microstrain $\varepsilon_\alpha$ of that ferrite phase is $\varepsilon_{max}$ found by formula 1 or less:

    $$\varepsilon_{max}=0.0035\text{-}T\sigma*2.63*10^{-6} \quad \text{(formula 1)}$$

    $$T\sigma=4Cr+25Ni+71(Mo+W)\text{-}11.4(Mo\text{-}1.3)*(Mo\text{-}1.3)+5Si\text{-}6Mn\text{-}30N+569(°C) \quad \text{(formula 2)}$$

    $$PREW=Cr+3.3(Mo+0.5W)+16N \quad \text{(formula 5)}$$

    where, the element symbols in formula 1, formula 2, and formula 5 show the contents (mass%) of the corresponding elements in the cladding material, 0 being inserted when not contained.

2.  The clad steel plate according to claim 1, further containing, in the chemical composition of the cladding material, by mass%, one or more of

    Co: 0.03 to 1.00%,
    Cu: 0.30 to 3.00%,

V: 0.03 to 1.00%,
Nb: 0.010 to 0.200%,
Ta: 0.010 to 0.200%,
Ti: 0.003 to 0.030%,
Zr: 0.005 to 0.050%,
Hf: 0.010 to 0.100%,
B: 0.0005 to 0.0050%,
Al: 0.003 to 0.050%,
Ca: 0.0005 to 0.0050%,
Mg: 0.0005 to 0.0050%,
REM: 0.010 to 0.100%, and
Sn: 0.010 to 0.100%.

3. A method for manufacturing clad steel plate by a sandwich assembly technique comprising bonding cladding materials according to claim 1 or 2 on single surfaces of a base metal of a steel sheet forming a slab, superposing two such slabs so that the cladding materials are arranged at the inside, and hot rolling the single integrated slab, which method for manufacturing clad steel plate comprising hot rolling to have a finishing temperature TF satisfying formula 3 and then cooling from TF to 600°C by an average cooling rate of 0.6°C/s or more:

$$TF \geq T\sigma - 50 \ (°C) \ (formula \ 3)$$

$$T\sigma = 4Cr + 25Ni + 71(Mo+W) - 11.4(Mo-1.3)*(Mo-1.3) + 5Si - 6Mn - 30N + 569 (°C) \ (formula \ 2)$$

where, the element symbols in formula 2 show the contents (mass%) of the corresponding elements in the cladding material, 0 being inserted when not contained.

4. A method for manufacturing clad steel plate by an open sandwich assembly technique comprising bonding a cladding material according to claim 1 or 2 on a single surface of a base metal of a steel sheet forming a slab and hot rolling the slab, which method for manufacturing clad steel plate comprising hot rolling to have a finishing temperature TF satisfying formula 4 and then cooling from TF to 600°C by an average cooling rate of 0.6°C/s or more:

$$TF \geq T\sigma + 30 \ (°C) \ (formula \ 4)$$

$$T\sigma = 4Cr + 25Ni + 71(Mo+W) - 11.4(Mo-1.3)*(Mo-1.3) + 5Si - 6Mn - 30N + 569 (°C) \ (formula \ 2)$$

where, the element symbols in formula 2 show the contents (mass%) of the corresponding elements in the cladding material, 0 being inserted when not contained.

# FIG. 1

## INTERNATIONAL SEARCH REPORT

International application No.

PCT/JP2020/014404

### A. CLASSIFICATION OF SUBJECT MATTER

C22C 38/00(2006.01)i; B23K 20/04(2006.01)i; C21D 8/02(2006.01)i; C22C 38/58(2006.01)i
FI:      C22C38/00 302Z; B23K20/04 C; B23K20/04 E; C21D8/02 D; C22C38/00 302H; C22C38/58

According to International Patent Classification (IPC) or to both national classification and IPC

### B. FIELDS SEARCHED

Minimum documentation searched (classification system followed by classification symbols)
C22C38/00-38/60; B23K20/04; C21D8/02

Documentation searched other than minimum documentation to the extent that such documents are included in the fields searched
Published examined utility model applications of Japan 1922-1996
Published unexamined utility model applications of Japan 1971-2020
Registered utility model specifications of Japan 1996-2020
Published registered utility model applications of Japan 1994-2020

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | JP 2012-180567 A (NIPPON STEEL & SUMIKIN STAINLESS STEEL CORPORATION) 20.09.2012 (2012-09-20) | 1-4 |
| A | WO 2014/148540 A1 (NIPPON STEEL & SUMIKIN STAINLESS STEEL CORPORATION) 25.09.2014 (2014-09-25) | 1-4 |
| A | WO 2013/132863 A1 (JFE STEEL CORPORATION) 12.09.2013 (2013-09-12) | 1-4 |
| A | JP 2018-28146 A (NIPPON STEEL & SUMIKIN STAINLESS STEEL CORPORATION) 22.02.2018 (2018-02-22) | 1-4 |

☐  Further documents are listed in the continuation of Box C.     ☒  See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 18 June 2020 (18.06.2020) | 30 June 2020 (30.06.2020) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

**EP 3 950 999 A1**

<table>
<tr><td colspan="2" align="center"><strong>INTERNATIONAL SEARCH REPORT</strong><br>Information on patent family members</td><td colspan="2">International application No.<br>PCT/JP2020/014404</td></tr>
</table>

| Patent Documents referred in the Report | Publication Date | Patent Family | Publication Date |
|---|---|---|---|
| JP 2012-180567 A | 20 Sep. 2012 | US 2013/0288074 A1<br>WO 2012/102330 A1<br>EP 2669397 A1<br>CN 103298965 A<br>KR 10-2013-0105721 A | |
| WO 2014/148540 A1 | 25 Sep. 2014 | (Family: none) | |
| WO 2013/132863 A1 | 12 Sep. 2013 | US 2015/0030883 A1<br>EP 2824211 A1<br>CN 104160056 A<br>KR 10-2014-0117620 A | |
| JP 2018-28146 A | 22 Feb. 2018 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7292445 A
- JP 4022677 B
- JP 6036993 B

- JP 2012180567 A
- JP 2018028146 A

**Non-patent literature cited in the description**

- *ISIJ,* 2018, vol. 58, 1181-1183